# EUROPÄISCHE PATENTSCHRIFT

(11) **EP 1 004 114 B1**
(45) Veröffentlichungstag und Bekanntmachung des Hinweises auf die Patenterteilung: **16.02.2005**
(21) Anmeldenummer: 99929060.4
(22) Anmeldetag: 30.04.1999
(51) Int. Cl.: G10K 15/04

(54) **MULTIFUNKTIONELLE AKUSTISCHE SIGNALVORRICHTUNG**
MULTIFUNCTIONAL ACOUSTIC SIGNALING DEVICE
DISPOSITIF DE SIGNALISATION ACOUSTIQUE MULTIFONCTIONNEL

(30) Priorität: 04.05.1998 DE 19819617; 04.05.1998 DE 29807876 U
(43) Veröffentlichungstag der Anmeldung: 31.05.2000
(73) Patentinhaber: Nauschütz, Moritz, 80339 München (DE)
(72) Erfinder: Nauschütz, Moritz, 80339 München (DE)
(74) Vertreter: Kern, Gerbert
(86) Internationale Anmeldenummer: PCT/DE1999/001275
(87) Internationale Veröffentlichungsnummer: WO 1999/057713

(56) Entgegenhaltungen:
- EP-A- 0 341 195
- DE-A- 2 331 423
- DE-U- 29 720 524
- GB-A- 2 304 450
- US-A- 4 396 941

## Beschreibung

Die Erfindung betrifft eine akustische Signalvorrichtung, die vorzugsweise bei Sportveranstaltungen zum Anfeuern der Sportler verwendet wird. Ein typischer Anwendungsfall ist Fußball. Gleichfalls kann die akustische Signalvorrichtung auch in anderen Veranstaltungen, in denen Akteure und Zuschauer beteiligt sind, eingesetzt werden.

Aus dem Stand der Technik sind für diese Zwecke Blasinstrumente, Klappern, schwenkbare Schnarren, Preßlufthupen, Lampen u. ä. bekannt. Diese Geräte erzeugen vorbestimmte, von dem Benutzer bevorzugte Signale bzw. Geräusche.

In der DE 196 39 958 wird ein Sporthandschutz für In-Line-Skater oder Skifahrer beschrieben, an dem eine wählbare akustische Signalvorrichtung befestigt ist. In der EP 0 341 195 ist ein Rasselkörper beschrieben, der sich als Werbeträger eignet und für Sportveranstaltungen vorgesehen ist. In der DE 83 24 599 wird eine Signalfeife mit veränderbarer Lautstärke und Tonhöhe beschrieben.

Der Nachteil dieser Geräte besteht darin, daß sie i. d. R. eine bestimmte, nicht veränderbare Tonfolge bzw. Signale erzeugen, bzw. einen charakteristischen Klang aufweisen und teilweise unhandlich oder sperrig sind. Es ist ferner von Nachteil, daß diese Geräte meist nur für den vorgesehenen Zweck verwendet werden können.

DE 2331423 beschreibt eine Anordnung für Ferngläser, so z.B. für das Theater oder Station, mit einer elektrischen oder elektronischen Tonverstärkung.

Es ist die Aufgabe der Erfindung, eine Vorrichtung zum Erzeugen von Signalen bzw. Tönen zu schaffen, die bei Massenveranstaltungen einsetzbar ist, insbesondere die zwischenmenschliche Kommunikation fördert und vorstehend erwähnte Nachteile vermeidet.

Die Aufgabe wird mit einer multifunktionellen akustischen Signalvorrichtung nach Patentanspruch 1 gelöst, wonach ein im wesentlichen diskusförmiges Gehäuse eine höckerförmige Ausbildung aufweist. In dem Gehäuse ist eine Kammer mit Schrotkügelchen angeordnet, die wie eine Rassel funktioniert.

Zwischen der höckerförmigen Ausbildung und der Kammer erstreckt sich ein Schallkanal, in dem eine Luftstrom-Tonerzeugungsvorrichtung angeordnet ist. In der höckerförmigen Ausbildung ist ein Fernrohr integriert, dessen optische Achse parallel zu der Ebene des Gehäuses in seiner Breitenerstreckung verläuft.

Die erfindungsgemäße Signalvorrichtung weist eine Reihe von Vorteilen auf: Es können verschiedene Töne oder optische Signale erzeugt werden. Durch Schütteln des Erfindungsgegenstandes werden die charakteristischen Geräusche einer Rassel erzeugt. Durch Einblasen von Luft werden mittels einer Luftstrom-Tonerzeugungsvorrichtung Töne erzeugt, deren Klangbild von der Luftstrom-Tonerzeugungsvorrichtung bestimmt wird. So können z. B. Tröten-, Pfeif-, Trompeten- oder Heultöne erzeugt werden. Durch Schwenken mit der Hand kann ein visueller Effekt erzeugt werden.

Da das Gehäuse durch Verwendung von Leichtbau-Materialien und - Technologien ein geringes Gewicht aufweist und keine scharfen Kanten hat, kann es bei Wurf oder Schlag keine gefährlichen Verletzungen verursachen. Das Fernrohr dient zur Verfolgung des Spielverlaufs und ist in dem Gehäuse bestens geschützt sowie kostengünstig herstellbar.

Gemäß Anspruch 2 ist das Fernrohrgehäuse integral in dem Gehäuse ausgebildet, wodurch nochmals die Fertigungskosten gesenkt werden können.

Gemäß Anspruch 3 ist in dem Gehäuse zusätzlich ein Radio integriert, das ein Mithören der Sportübertragung erlaubt. Die Antenne ist vorteilhaft an der Peripherie innerhalb des Gehäuses geführt, und der Lautsprecher ist parallel zu der Kammer angeordnet.

Gemäß Anspruch 4 ist wenigstens ein von außen sichtbares, elektrisches Leucht- oder Signalelement vorgesehen, wobei die dafür erforderliche Energiequelle im Gehäuse angeordnet ist. Dieses Leucht- oder Signalelement dient u. a. zum rhythmischen Schwenken mit den Armen, was bislang mit Taschenlampen oder brennenden Feuerzeugen erfolgte. Die Ausführungsform nach Patentanspruch 4 weist den Vorteil auf, daß die Brandgefahr, wie sie bei dem Schwenken der Feuerzeuge entsteht, ausgeschlossen wird. Ferner ist der durch ein Schwenken des Erfindungsgegenstandes in dieser Weiterbildung bewirkte optisch -ästhetische Effekt größer als bei einem Feuerzeug.

Gemäß Anspruch 5 ist eine Ansteuerschaltung vorgesehen ist, die bewirkt, daß von dem Leucht- oder Signalelement vorbestimmbare Lichtsignale ausgesendet werden. Bei dieser Weiterbildung des Erfindungsgegenstandes wird ein besonders intensiver optisch- ästhetische Effekt erzeugt. Die Art der Lichtsignale kann einstellbar sein.

Ferner sind auch mehrere Leucht- oder Signalelemente einsetzbar, die z. B. durch unterschiedliche elektrischen Ansteuerung verschiedene Blinkmuster erzeugen. Als Leucht- oder Signalelemente kommen z. B. Lampen oder Leuchtdioden zum Einsatz. Bevorzugt können auch Leuchtmaterialien eingesetzt werden, die beim Anlegen einer elektrischen Spannung zum Leuchten angeregt werden.

Gemäß Anspruch 5 ist eine Chipkarten-Lese-Vorrichtung vorgesehen, mit welcher z. B. die Ansteuerschaltung für die Leucht- oder Signalelement angesteuert werden kann. So können z. B. vor einer Veranstaltung mit der Eintrittskarte Chipkarten ausgegeben werden. Mit dieser Chipkarte kann z. B. die Ansteuerschaltung für die Leucht- oder Signalelement angesteuert werden, so daß vorbestimmte optische Signale abgegeben werden.

Weitere Maßnahmen und Vorteile der Erfindung ergeben sich aus der nachfolgenden Beschreibung eines Ausführungsbeispiels in Verbindung mit den beigefügten schematischen Zeichnungen.
- Fig. 1: zeigt einen Querschnitt der Erfindung in der Draufsicht

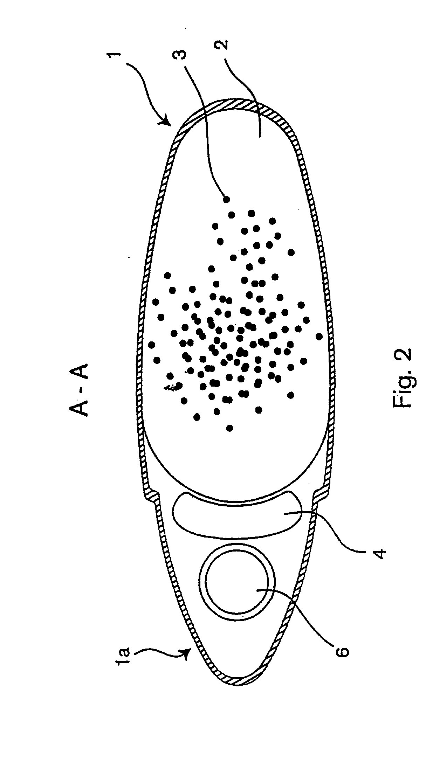

- Fig. 2: zeigt einen Seiten-Querschnitt der Erfindung entlang der Linie A-A

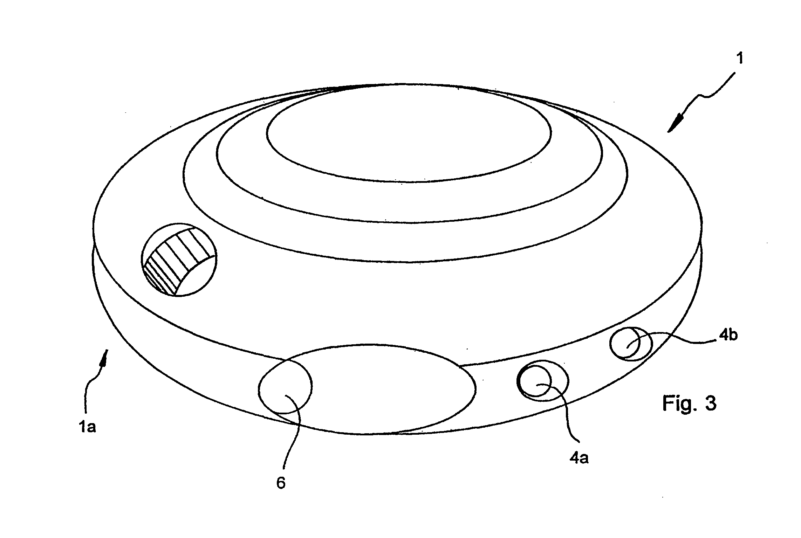

- Fig. 3: zeig eine perspektivische Seitenansicht.

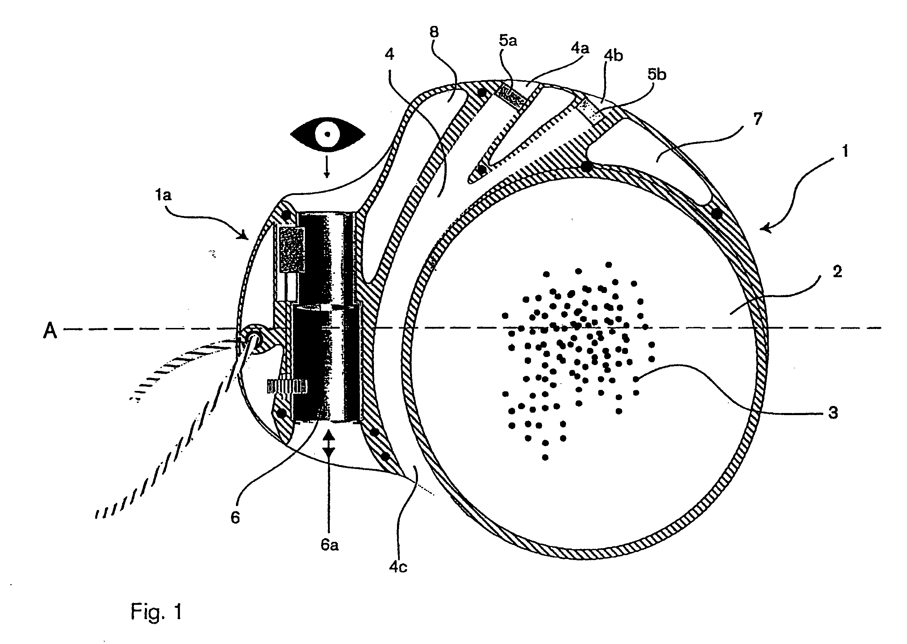

Die Fig. 1 zeigt ein diskusförmiges Kunststoffgehäuse 1 mit einer runden Kammer 2, in der frei bewegliche Schrotkügelchen 3 aus Metall, Kunststoff, Glas oder anderen geeigneten Materialien eingeschlossen sind. Das Gehäuse weist über seine größte Längserstreckung eine Länge von ca. 150 mm auf. Seine größte Dicke beträgt bei diesem Ausführungsbeispiel 70 mm. Der Geräuschgenerator wird mit einer Hand gehalten und geschüttelt, wobei die Schrotkügelchen vorbestimmte Geräusche erzeugen, die von deren Größe, Material und den akustischen Verhältnissen der Kammer abhängen.

Das Gehäuse 1 weist ferner einen Schallkanal 4 auf. Im vorliegenden Ausführungsbeispiel hat der Schallkanal 4 zwei Einstecköffnungen 4a und 4b, in denen sich Tonerzeugungselemente 5a und 5b der Type befinden, die beim Hineinblasen einen Ton erzeugt, der durch den Schallkanal 4 geleitet wird und aus der Austrittsöffnung 4c austreten. Im vorliegenden Ausführungsbeispiel werden Tonerzeugungselemente 5 mit unterschiedlichen Tonarten verwendet.

An das Gehäuse 1 angeformt ist eine Ausbildung 1 a, in der ein Fernrohr 6 integriert ist, deren Zweck nicht erläutert werden muß.

Bei einer weiteren Ausführungsform ist in dem Hohlraum 7 die Elektronik eines Radios integriert, während der Hohlraum 8 als Batteriefach ausgebildet ist. Der Lautsprecher (nicht gezeigt) ist auf einer Seite der Kammer 2 angeordnet. Anstelle des Lautsprechers kann auch ein Display eines Miniatur-Fernsehgerätes vorgesehen sein.

Ferner kann das Gehäuse mit nach außen sichtbaren elektrischen Leuchtoder Signalelementen bestückt sein, die von einer Ansteuerelektronik betrieben werden, so daß sowohl eine Lampenfunktion als auch eine Signalfunktion ermöglicht werden kann.

## Patentansprüche

1. Multifunktionelle akustische Signalvorrichtung, die aufweist:
- ein im wesentlichen diskusartiges, visuell vorbestimmt gestaltetes Gehäuse (1) mit einer höckerförmigen Ausbildung (1a),
- eine Rassel-Kammer (2), die von der Ausbildung (1a) beabstandet innerhalb des Gehäuses (1) angeordnet ist und Schrotkügelchen (3) enthält,
- ein, eine Luftstrom-Tonerzeugungsvorrichtung (5a, 5b) aufweisender Schallkanal (4), der sich quer durch das Gehäuse (1) zwischen der Ausbildung (1a) und der Rassel-Kammer (2) erstreckt und
- ein Fernrohr (6), das in der höckerförmigen Ausbildung (1a) integriert ist, wobei die optische Achse (6a) des Fernrohrs (6) parallel zu der Ebene des Gehäuses (1) in seiner Breitenerstreckung verläuft.

2. Multifunktionelle akustische Signalvorrichtung nach Anspruch 1, **dadurch gekennzeichnet, daß** das Fernrohrgehäuse integral in dem Gehäuse (1) ausgebildet ist.

3. Multifunktionelle akustische Signalvorrichtung nach Anspruch 1 oder 2, **dadurch gekennzeichnet, daß** in dem Gehäuse (1) ein Radio oder ein Fernsehgerät integriert ist und der Lautsprecher oder der Bildschirm parallel zu der Rassel-Kammer (2) angeordnet sind.

4. Multifunktionelle akustische Signalvorrichtung nach einem der vorhergehenden Ansprüche, **dadurch gekennzeichnet, daß** nach außen sichtbare elektrische Leucht- oder Signalelemente und eine Batterie im Gehäuses (1) angeordnet sind.

5. Multifunktionelle akustische Signalvorrichtung nach Anspruch 4, **dadurch gekennzeichnet, daß** eine Ansteuerschaltung vorgesehen ist, die bewirkt, daß die Signalelemente vorbestimmbare Lichtsignale aussenden.

6. Multifunktionelle akustische Signalvorrichtung nach Anspruch 3 bis 5, **dadurch gekennzeichnet, daß** eine Chipkarten-Lesevorrichtung vorgesehen ist.

7. Multifunktionelle akustische Signalvorrichtung nach Anspruch 6, **dadurch gekennzeichnet, daß** die Chipkarten-Lesevorrichtung eine elektrisch ansteuerbare Signalerzeugungsvorrichtung ansteuert.

## Claims

1. Multifunctional acoustical signaling device comprising:
- a basically disk-shaped housing (1) arranged in a visually predetermined manner having a bump-shaped protrusion (1a),
- a rattle chamber (2) that is set apart from the protrusion (1a) inside the housing (1) and which contains pellets (3),
- an acoustic channel (4) provided with a device for producing sounds using airflow (5a, 5b), whereby said channel extends diagonally through the housing (1) between the protrusion (1 a) and the rattle chamber (2) and
- a telescope (6) that is integrated into the bump-shaped protrusion (1a), whereby the optical axis (6a) of the telescope (6) runs parallel to the plane of the housing (1) along the extent of its shorter dimension (width).

2. A multifunctional acoustical signaling device of claim 1, wherein the telescope housing is designed to be integrated into the housing (1).

3. A multifunctional acoustical signaling device of claim 1 or 2, wherein a radio or television is integrated into the housing (1) and the loudspeaker or screen is provided parallel to the rattle chamber (2).

4. A multifunctional acoustical signaling device of one of the above claims, wherein electrical light or signaling elements that are visible from the outside, and a battery, are provided in the housing (1).

5. A multifunctional acoustical signaling device of claim 4, wherein a control switch is provided that causes the signaling element to transmit predetermined light signals.

6. A multifunctional acoustical signaling device of claims 3 to 5, wherein a chip card reader is provided.

7. A multifunctional acoustical signaling device of claim 6, wherein the chip card reader controls an electrically controllable signal generating device.

## Revendications

1. Dispositif de signalisation acoustique multifonctionnel se composant :
- d'un boîtier principalement circulaire, à l'apparence prédéfinie (1) et se terminant par une bosse (1a),
- d'une chambre de résonance (2) située à l'intérieur du boîtier (1), isolée de la bosse (1 a) et contenant de petites billes de fer (3),
- d'un canal acoustique (4) comportant un dispositif à air pouvant générer des sons (5a, 5b) et s'étendant au travers du boîtier (1) entre la bosse (1a) et la chambre de résonance (2), ainsi que
- d'une longue-vue (6) intégrée dans la bosse (1a), de sorte que l'axe optique (6a) de la longue-vue (6) soit parallèle à la surface du boîtier (1), dans le sens de la largeur.

2. Dispositif de signalisation acoustique multifonctionnel selon la revendication 1, **caractérisé en ce que** le boîtier de la longue-vue est totalement intégré dans le boîtier (1 ).

3. Dispositif de signalisation acoustique multifonctionnel selon les revendications 1 ou 2, **caractérisé en ce qu'**une radio ou un appareil de télévision est intégré dans le boîtier (1) et **en ce que** le haut-parleur ou l'écran est monté parallèlement à la chambre de résonance (2).

4. Dispositif de signalisation acoustique multifonctionnel selon une des revendications précitées, **caractérisé en ce que** des éléments électriques lumineux ou de signalisation visibles de l'extérieur et une batterie sont intégrés dans le boîtier (1).

5. Dispositif de signalisation acoustique multifonctionnel selon la revendication 4, **caractérisé en ce qu'**un circuit de commande est prévu ; grâce à celui-ci, les éléments de signalisation peuvent émettre des signaux lumineux prédéfinis.

6. Dispositif de signalisation acoustique multifonctionnel selon les revendications 3 à 5, **caractérisé en ce qu'**un lecteur de carte à puce est prévu.

7. Dispositif de signalisation acoustique multifonctionnel selon la revendication 6, **caractérisé en ce que** le lecteur de carte à puce commande un dispositif électrique émettant des signaux.
